# EUROPEAN PATENT SPECIFICATION

(11) **EP 2 796 347 B1**
(45) Date of publication and mention of the grant of the patent: **22.03.2017**
(21) Application number: 14165700.7
(22) Date of filing: 23.04.2014
(51) Int. Cl.: B62D 25/08, B62D 21/15

(54) **Motor Vehicle Body**
Kraftfahrzeugkarosserie
Carrosserie de véhicule automobile

(30) Priority: 23.04.2013 IT TO20130329
(43) Date of publication of application: 29.10.2014
(73) Proprietor: Fiat Group Automobiles S.p.A., 10135 Torino (TO) (IT)
(72) Inventor: Favaloro, Sebastian, 10135 Torino (IT); Soddu, Giuseppe Antonio, 10135 Torino (IT)
(74) Representative: Lovino, Paolo

(56) References cited:
- DE-A1-102010 041 184
- US-A- 5 031 958
- US-A1- 2003 025 358
- US-B2- 7 469 956

## Description

The present invention relates to a motor vehicle body.

As is known, the body of motor vehicles is designed to meet requirements which allow to obtain an adequate safety for the passengers in the event of accidents.

With regard to frontal crashes, the front engine compartment of motor vehicles has two primary longitudinal struts and two secondary longitudinal struts, the struts having collapsible zones for absorbing energy resulting from crashes at relatively high speed. The primary struts extend so as to protrude from the passenger compartment structure at a height corresponding to the front wheelhouses and, at the end thereof, support the front end of the motor vehicle. The secondary struts extend so as to protrude from the uprights of the front doors, above the wheelhouses and therefore are arranged higher and more outwards.

The above described configuration allows to obtain excellent performance with regard to safety in the passenger compartment in the event of a frontal crash occurring against an obstacle approximately at the longitudinal centreline axis of the motor vehicle.

Nevertheless, the results are not as satisfactory when the frontal crash occurs with a relevant offset or deviation with respect to the longitudinal centreline axis and, therefore, involves substantially a front angle of the motor vehicle. In this event, the stress due to the crash is indeed unloaded mainly on the secondary strut arranged on the side involved by the frontal crash, and the primary struts are involved only minimally, therefore the plastic deformation of the body is not able to sufficiently absorb the crash energy.

To obtain better results, it is known to vary the configuration of the primary struts, by making them diverge so that they also intervene in the plastic deformation, when a frontal crash of the above described type occurs.

However, this configuration is more cumbersome, so that it preferably should be avoided.

DE102010041184A1 discloses a body structure, symmetrical witch respect to the vehicle longitudinal axis and having two main longitudinal beams, two upper longitudinal beams and two lower longitudinal beams. In the front region, the body structure comprises two connecting rods, that connect the main longitudinal beams at the upper longitudinal beams and are oriented at an acute angle with respect to the vehicle longitudinal axis.

It is therefore the object of the present invention to provide a motor vehicle body, which allows to resolve the above described drawbacks in a simple and affordable way and, preferably, adopt a solution which may be instaled in a simple manner and with a relatively low number of modifications on bodies provided with longitudinal struts of the above described type, without having to redesign such struts and without excessively increasing the overall weight and the dimensions of the body in the engine compartment.

According to the present invention, a motor vehicle body is provided, as defined in claim 1.

To better understand the present invention, a preferred embodiment thereof is now described, by way of non-limiting example, with reference to the accompanying drawings, in which:
- figure 1 is a simplified front view, and with parts removed for clarity, of a motor vehicle provided with a preferred embodiment of the body according to the present invention;
- figure 2 is a perspective top view, on enlarged scale, of the body of figure 1; and
- figure 3 is a perspective bottom view of a detail of figure 2.

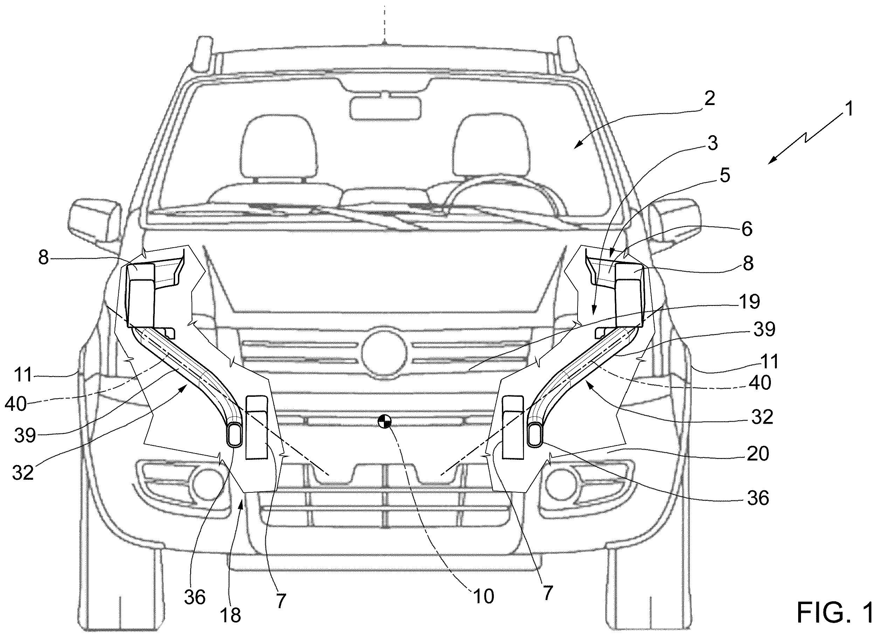

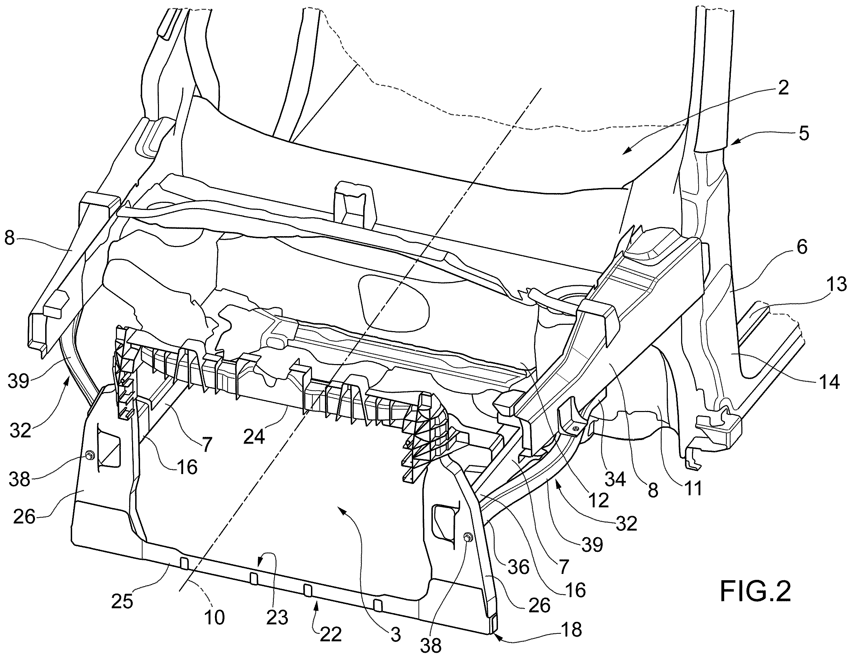

In figure 1, numeral 1 indicates a motor vehicle having a passenger compartment 2 and an engine compartment 3, arranged in front of a lower zone of the passenger compartment 2. The motor vehicle 1 comprises a body 5, which in turn comprises a structure 6 defining the passenger compartment 2, two primary longitudinal struts 7 and two secondary longitudinal struts 8. The struts 7, 8 are arranged in the engine compartment 3, are substantially parallel to a longitudinal axis 10 which coincides with the advancement axis of the motor vehicle 1, and extend so as to protrude from structure 6. In particular, as also shown in figure 2, the struts 7 are arranged lower and more inwards than the struts 8, are side by side in horizontal direction with the front wheelhouses 11 of the motor vehicle 1, define an extension of a vehicle floor 13 of structure 6, and extend so as to protrude forward, from a slightly higher point than the vehicle floor 13, starting from a substantially vertical wall 12, which is called "fire-protection panel" and delimits a lower zone of the passenger compartment 2.

On the other hand, the struts 8 are arranged over the wheelhouses 11 and extend so as to protrude from respective front vertical uprights 14, which also support, in known and not shown manner, the front side doors of the motor vehicle 1.

The front end portions of the struts 7 are indicated by numeral 16 and support a front end 18 of the motor vehicle 1 (partially shown). In particular, the front end 18 comprises a heat exchanger assembly (not shown), a grille 19, a bumper 20 (figure 1) and a frame 22 (figure 2), which supports the heat exchanger assembly, grille 19 and bumper 20 in known and not shown manner, and defines a substantially rectangular opening 23 which at least partially accommodates the above-mentioned assembly.

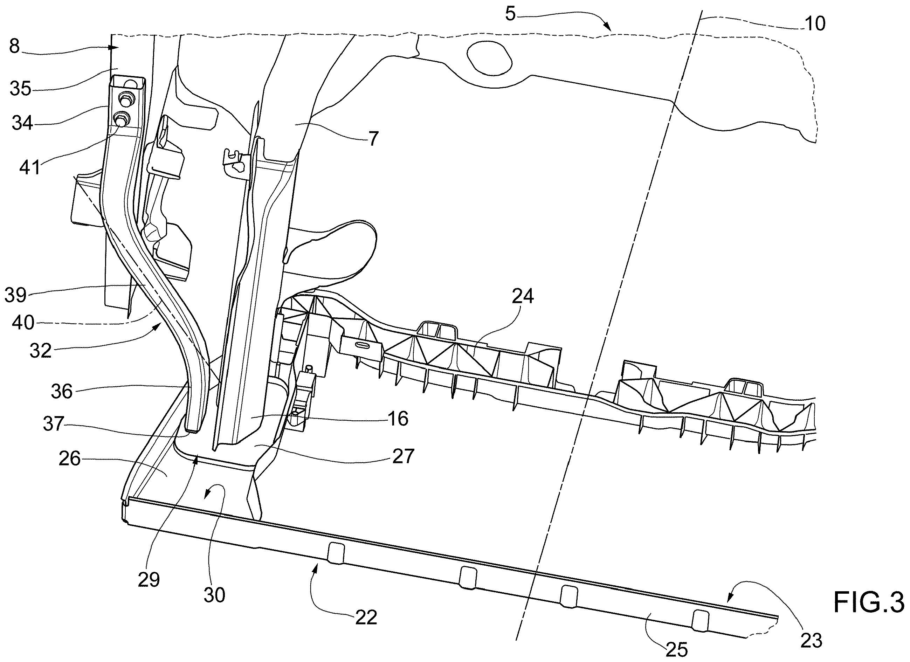

With reference to figure 3, frame 22 comprises an upper cross member 24, a lower cross member 25, and two lateral uprights 26, which are normally called vertical links and are fixed at the ends 16, preferably by means of the interposition of respective plates 27.

Preferably, the lateral uprights 26 are defined by respective plates, which are substantially vertical, are aligned longitudinally with the struts 7 and are provided with holes for coupling to the struts 7 and/or to the plates 27 by means of screws or bolts.

The plates 27 have respective rear faces 29, which are substantially orthogonal to the struts 7, axially rest against the ends 16 and are fixed with the latter, preferably by means of screws or welding. The plates 27 have respective front faces resting against the rear faces 30 of the lateral uprights 26 and perform a dual function: on the one hand, they stiffen the areas where frame 22 is connected to the struts 7; on the other hand, they allow respective elongated members 32 to be connected to the ends 16. In other words, the elongated members 32 define, together with the plates 27, two connection devices for constraining the ends 16 to the struts 8, in order to improve the degree of safety provided by body 5 in the event of accident with frontal crash against an obstacle or barrier in presence of a relatively small overlap between the front end of the motor vehicle 1 and such an obstacle or barrier, that is when the frontal crash involves substantially a front angle of the motor vehicle 1.

The elongated members 32 comprise respective rear terminal portions 34 which are fixed to intermediate portions 35 of the struts 8; and respective front terminal portions 36, which are parallel but separate from the ends 16. In particular, the ends 16 and the portions 36 are arranged side by side horizontally, with a relatively small intermediate gap. At the same time, the portions 36 are fixed to the plates 27, in addition to the ends 16. In particular, the lateral uprights 26 and the plates 27 are engaged by screws 38 (figure 2), screwed into nut screws 37 which are fixed in the portions 36, for example by means of welding. The screws 38 are therefore parallel to axis 10.

According to a not shown alternative, the portions 36 rests against a side of the ends 16 and are fixed directly to the ends 16, by means of screws and/or bolts which extend orthogonal to axis 10, possibly without the plates 27.

The elongated members 32 comprise intermediate portions 39, which join the portions 34 to the portions 36 and extend along respective directions 40 which, as also shown in figure 1, are substantially symmetric with respect to a vertical centerline plane and diverge from each other extending from the front end 18 backwards towards structure 6.

Therefore, not only the elongated members 32 stiffen body 5, since they connect the struts 7 to the struts 8, but they define respective deflectors or guides which help to laterally deviate the motor vehicle 1 outwards when the front end 18 frontally crashes against the obstacle or the barrier with a relatively small overlap, that is when the frontal crash mainly involves one of the two struts 8.

In particular, the intermediate portions 39 are S-shaped, that is they do not have edges for joining the portions 34 to the portions 36.

Preferably, the cross section of the elongated members 32 is constant along the directions 40. Advantageously, the elongated members 32 are defined by respective tubes, so as to give the best compromise between lightness and rigidity/resistance.

Again with reference to figure 3, preferably the portions 34 are parallel to the struts 8, rest on the portions 35 and are fixed to the latter by means of bolts and screws 41, which extend orthogonal to the resting surface defined by the portions 35. Preferably, the portions 34 rest on a lower face of the portions 35, therefore the screws 41 are approximately vertical. As indicated above, the screws 38 are instead parallel to axis 10: the spatial orientation difference between the axes of the screws 41 and 38 contributes to obtaining a better distribution of the stresses in the two connection areas in which the elongated members 32 are fixed, and therefore increased break resistance of such connection areas in the event of frontal crash.

As indicated above, in the event of frontal crash against an obstacle at a lateral area of relatively small amplitude, the corresponding elongated member 32 on the angle involved in the frontal crash transmits part of the stress between the struts 7 and 8 and stiffens this lateral part of body 5. At the same time, the intermediate portion 39 defines a diverter which, when hitting the obstacle, tends to cause the front end 18 to deviate laterally in the direction opposite to the obstacle during the crash, while the front end 18 and the struts 7, 8 deform plastically to absorb energy. Assuming that the obstacle is fixed, with this deviation the motor vehicle 1 tends to slightly vary the advancing direction and therefore tends to slide away laterally with respect to the obstacle.

Due to this behaviour, the effects of the misaligned frontal crash with small overlap with respect to the barrier or obstacle are reduced. In particular, the stresses on strut 8 resulting from such a crash are reduced, therefore increased safety is ensured in the passenger compartment 2 with respect to solutions lacking the members 32.

At the same time, the connection system between the screws and/or bolts, with no welding, for fixing the elongated members 32 allows this solution to be applied in the production lines, only for types of vehicles in which it is actually needed and/or is legally required to meet specific requirements in the event of a crash.

Thereby, it is possible to obtain increased standardization for different motor vehicles, without having to completely redesign bodies which are normally used. In other words, with respect to known solutions, in order to accommodate the elongated members 32 there is only necessary to drill the lateral uprights 26 and the plates 27 to ensure the fastenings defined by the screws 38, drill the portions 35 to allow the fastening of the portions 34, and possibly stiffen the portions 35.

Then, the specific above described features allow to obtain advantages of simplicity and resistance, apparent to a person skilled in the art.

Finally, it is apparent from the above that modifications and variants may be made to body 5 herein described and illustrated, without departing from the scope of protection of the present invention, as defined in the appended claims.

In particular, the cross section of the elongated members 32 could be different from the one indicated by way of example, for example such cross section might not be constant along the directions 40.

## Claims

1. A motor vehicle body (5) comprising:
- a structure (6) defining a passenger compartment (2);
- two secondary longitudinal struts (8), which extend forward so as to protrude from said structure (6) and are substantially parallel to a longitudinal axis (10);
- two primary longitudinal struts (7), which extend forward so as to protrude from said structure (6), are parallel to said longitudinal axis (10), are arranged in lower positions and more inwards than said secondary longitudinal struts (8) and comprise respective front end portions (16) adapted to support a front end (18) of the motor vehicle;
- two connection devices, each of which joins a respective said front end portion (16) to a respective said secondary longitudinal strut (8); said connection devices comprising respective elongated members (32) comprising respective front and rear terminal portions (36, 34) and respective intermediate portions (39) extending along respective directions (40) which are substantially symmetric with respect to a vertical centerline plane and diverge, extending towards said structure (6);
**characterized in that** said front and rear terminal portions (36, 34) are substantially parallel to said primary and secondary longitudinal struts (7, 8), and said intermediate portions (39) are S-shaped.

2. The body according to claim 1, **characterized in that** said elongated members (32) have constant cross section.

3. The body according to claim 1 or 2, **characterized in that** said elongated members (32) are defined by tubes.

4. The body according to any one of the preceding claims, **characterized in that** said connection devices comprise:
- first fastening means (27, 37, 38) fixing said front terminal portions (36) to said front end portions (16), and
- second fastening means (41) fixing said rear terminal portions (34) to intermediate zones (35) of said secondary longitudinal struts (8).

5. The body according to claim 4, **characterized in that** said first fastening means comprise first screws (38), and said second fastening means comprise second screws (41).

6. The body according to claim 5, **characterized in that** said second screws (41) extend along axes which are spatially oriented differently from said first screws (38).

7. The body according to any one of the claims 4 to 6, **characterized in that** said first fastening means comprise two plates (27), which are substantially orthogonal to said front end portions (16) and to said front terminal portions (36); said front end portions (16) and said front terminal portions (36) being separate from one another and being fixed to said plates (27).

## Patentansprüche

1. Kraftfahrzeugkarosserie (5), die Folgendes aufweist:
- eine Struktur (6), die ein Fahrgastabteil (2) definiert;
- zwei sekundäre längsverlaufende Streben (8), die sich nach vorne erstrecken, so dass sie von der Struktur (6) vorstehen und im Wesentlichen parallel zu einer Längsachse (10) sind;
- zwei primäre längsverlaufende Streben (7), die sich nach vorne erstrecken, so dass sie von der Struktur (6) vorstehen, die parallel zur Längsachse (10) sind, die in unteren Positionen und weiter innen als die sekundären längsverlaufenden Streben (8) angeordnet sind und jeweilige vordere Endteile (16) aufweisen, die ausgebildet sind, um ein vorderes Ende (18) des Motorfahrzeugs zu tragen;
- zwei Verbindungsvorrichtungen, wobei jede davon einen entsprechenden vorderen Endteil (16) mit einer entsprechenden sekundären längsverlaufende Strebe (8) verbindet; wobei die Verbindungsvorrichtungen jeweilige langgestreckte Glieder (32) aufweisen, die jeweilige vordere und hintere Abschlussteile (36, 34) und jeweilige Zwischenteile (39) aufweisen, welche sich entlang jeweiliger Richtungen (40) erstrecken, die im Wesentlichen symmetrisch bezüglich einer vertikalen Mittellinienebene sind und auseinander laufen, wobei sie sich zu der Struktur(6) hin erweitern;
**dadurch gekennzeichnet, dass** die vorderen und hinteren Abschlussteile (36, 34) im Wesentlichen parallel zu den primären und sekundären längsverlaufenden Streben (7, 8) sind, und dass die Zwischenteile (39) S-förmig sind.

2. Karosserie nach Anspruch 1, **dadurch gekennzeichnet, dass** die langgestreckten Glieder (32) einen konstanten Querschnitt haben.

3. Karosserie nach Anspruch 1 oder 2, **dadurch gekennzeichnet, dass** die langgestreckten Glieder (32) durch Rohre definiert werden.

4. Karosserie nach einem der vorhergehenden Ansprüche, **dadurch gekennzeichnet, dass** die Verbindungsvorrichtungen Folgendes aufweisen:
- erste Befestigungsmittel (27, 37, 38), welche die vorderen Abschlussteile (36) an den vorderen Endteilen (16) befestigen und
- zweite Befestigungsmittel (41), welche die hinteren Abschlussteile (34) an Zwischenzonen (35) der sekundären längsverlaufenden Streben (8) befestigen.

5. Karosserie nach Anspruch 4, **dadurch gekennzeichnet, dass** die ersten Befestigungsmittel erste Schrauben (38) aufweisen und dass die zweiten Befestigungsmittel zweite Schrauben (41) aufweisen.

6. Karosserie nach Anspruch 5, **dadurch gekennzeichnet, dass** die zweiten Schrauben (41) sich entlang Achsen erstrecken, die räumlich anders orientiert sind als die ersten Schrauben (38).

7. Karosserie nach einem der Ansprüche 4 bis 6, **dadurch gekennzeichnet, dass** die ersten Befestigungsmittel zwei Platten (27) aufweisen, die im Wesentlichen orthogonal zu den vorderen Endteilen (16) und zu den vorderen Abschlussteilen (36) sind; wobei die vorderen Endteile (16) und die vorderen Abschlussteile (36) voneinander getrennt sind und an den Platten (27) befestigt sind.

## Revendications

1. Carrosserie de véhicule motorisé (5) comprenant :
- une structure (6) définissant un habitacle passager (2) ;
- deux montants longitudinaux secondaires (8), qui s'étendent vers l'avant de façon à dépasser de ladite structure (6) et sont sensiblement parallèles à un axe longitudinal (10) ;
- deux montants longitudinaux primaires (7), qui s'étendent vers l'avant de façon à dépasser de ladite structure (6), sont parallèles audit axe longitudinal (10), sont agencés dans des positions inférieures et davantage vers l'intérieur que lesdits montants longitudinaux secondaires (8) et comprennent des parties d'extrémité avant (16) respectives adaptées pour supporter une extrémité avant (18) du véhicule motorisé ;
- deux dispositifs de raccordement, dont chacun joint une dite partie d'extrémité avant (16) respective à un dit montant longitudinal secondaire (8) respectif ; lesdits dispositifs de raccordement comprenant des organes allongés (32) respectifs comprenant des parties terminales avant et arrière (36, 34) respectives et des parties intermédiaires (39) respectives s'étendant le long de directions (40) respectives qui sont sensiblement symétriques par rapport à un plan central vertical et bifurquent, s'étendant vers ladite structure (6) ;
**caractérisée en ce que** lesdites parties terminales avant et arrière (36, 34) sont sensiblement parallèles auxdits montants longitudinaux primaires et secondaires (7, 8), et lesdites parties intermédiaires (39) sont en forme de S.

2. Carrosserie selon la revendication 1, **caractérisée en ce que** lesdits organes allongés (32) ont une section transversale constante.

3. Carrosserie selon la revendication 1 ou 2, **caractérisée en ce que** lesdits organes allongés (32) sont définis par des tubes.

4. Carrosserie selon l'une quelconque des revendications précédentes, **caractérisée en ce que** lesdits dispositifs de raccordement comprennent :
- des premiers moyens d'attache (27, 37, 38) fixant lesdites parties terminales avant (36) auxdites parties d'extrémité avant (16), et
- des seconds moyens d'attache (41) fixant lesdites parties terminales arrière (34) à des zones intermédiaires (35) desdits montants longitudinaux secondaires (8).

5. Carrosserie selon la revendication 4, **caractérisée en ce que** lesdits premiers moyens d'attache comprennent des premières vis (38), et lesdits seconds moyens d'attache comprennent des secondes vis (41).

6. Carrosserie selon la revendication 5, **caractérisée en ce que** lesdites secondes vis (41) s'étendent le long d'axes qui sont orientés spatialement différemment desdites premières vis (38).

7. Carrosserie selon l'une quelconque des revendications 4 à 6, **caractérisée en ce que** lesdits premiers moyens d'attache comprennent deux plaques (27), qui sont sensiblement orthogonales auxdites parties d'extrémité avant (16) et auxdites parties terminales avant (36) ; lesdites parties d'extrémité avant (16) et lesdites parties terminales avant (36) étant séparées les unes des autres et étant fixées auxdites plaques (27).
